Europäisches Patentamt

(19) European Patent Office

Office européen des brevets

(11) Publication number: **0 111 785**
**A1**

# (12) EUROPEAN PATENT APPLICATION

(21) Application number: 83111980.5

(22) Date of filing: 29.11.83

(51) Int. Cl.³: **B 64 C 3/14**

(30) Priority: 20.12.82 US 451742

(43) Date of publication of application:
27.06.84 Bulletin 84/26

(84) Designated Contracting States:
DE FR GB IT NL SE

(71) Applicant: The Boeing Company
P.O. Box 3707
Seattle Washington 98124(US)

(72) Inventor: Versteegh, Theo C.
12729 S.E. 95th PL
Renton, WA 98056(US)

(74) Representative: Hoijtink, Reinoud et al,
OCTROOIBUREAU ARNOLD & SIEDSMA Isartorplatz 5
D-8000 München 2(DE)

(54) **Natural laminar flow, low wave drag airfoil.**

(57) The maximum thickness of the airfoil (10) is at a chord station ($t_{max}$) near the midchord station. The upper surface of the airfoil (10) has a point of minimum curvature located forward of both the station ($t_{max}$) and the midchord station. Aft of the midchord station, the curvature of the upper surface increases and then decreases. There are no regions of constant radius of curvature on the upper surface forward of 98% of the chord. The lower surface is cambered but not highly cambered. The leading edge is shaped to obtain a steep initial pressure gradient to about 1% of chord. The leading edge has a generally elliptical upper surface portion and a generally elliptical lower surface portion. More than half the thickness of the leading edge is below the chord line to about 1% of chord. The curvature of the airfoil (10) obtains a favorable pressure gradient that provides natural laminar flow over the upper surface to about 60% of chord and over the lower surface to about 45% of chord for a range of chord Reynolds numbers and sweep angles. There are low shock wave losses at supercritical Mach numbers.

./...

**Fig. 2**

$C_P$

$M = 0.78$
$C_L = 0.50$
$t/c = 10.1\ \%$
$R_{NC} = 30 \times 10^6$

AIRFOIL
PRESSURE
DISTRIBUTION

AIRFOIL
SHAPE

10

12

$\bar{z}_{m,up}$

$t_{max.}$

$\bar{z}_{m,lower}$

CHORD STATION $X/c$

$R_{1A}$

$R_{1B}$

$R_1$

$R_2$

$R_3$

-1-

## Description

NATURAL LAMINAR FLOW, LOW WAVE DRAG AIRFOIL

### Technical Field

This invention relates to airfoils and, more particularly, to an airfoil that provides natural laminar flow over a large percentage of the airfoil chord in addition to producing low shock wave losses at supercritical Mach numbers and operational coefficients of lift.

### Background Art

One of the primary goals in the design of modern aircraft is the minimization of drag in order to maximize the aerodynamic efficiency of the aircraft. Maximization of the aerodynamic efficiency of aircraft has become increasingly important in recent years because of skyrocketing fuel costs and an increasing awareness of the fact that fossil fuels are a nonrenewable resource.

Current advanced airfoils, generally referred to as supercritical airfoils, have significantly more aerodynamic efficiency than earlier conventional airfoils. This improvement in efficiency has been obtained by reducing wave drag by providing low shock wave losses at supercritical Mach numbers and operational coefficients of lift. The shock wave losses are maintained at a low level by rapidly accelerating flow along the airfoil to a peak local Mach number and then isentropically recompressing the flow. This achieves the goal of low wave drag, but there is a trade off involved. The flow along essentially the entire length of the chord of the airfoil is turbulent since the boundary layer cannot stand recompression and remain laminar. Therefore, there is a high level of friction drag. In other words, relatively shock free flow and the consequent low wave drag is obtained at the expense of relatively high friction drag caused by the turbulent flow.

The patent literature includes various examples of supercritical airfoils. Each of the following United States Patents discloses such an airfoil: No. 3,952,971, granted April 27, 1976, to R. T. Whitcomb; No. 4,072,282, granted February 7, 1978, to J. L. Fulker et al; and No. 4,121,787, granted October 24, 1978, to P. G. Wilby. Each of the airfoils disclosed in these patents is characterized by a relatively blunt leading edge. In addition, the Whitcomb and Fulker et al airfoils have highly cambered trailing edges.

U.S. Patent No. 4,067,518, granted January 10, 1978, to J. H. Paterson et al; and U.S. Patent No. 4,311,289, granted January 19, 1982, to T. Finch each disclose an aerodynamic structure designed to cooperate with the wing structure to improve aerodynamic efficiency.

The following United States patents disclose conventional airfoils and wing structures. These patents provide an overview of the development of the art of airfoil and airplane wing design.

No. 1,571,989, granted February 9, 1926, to P. G. Zimmermann;

No. 1,719,293, granted July 2, 1929, to P. E. H. Gripon;

No. 1,791,233, granted February 3, 1931, to L. Breguet;

No. 1,802,283, granted April 21, 1931, to O. E. Simmonds;

No. 1,889,864, granted December 6, 1932, to A. A. Merrill;

No. 2,078,854, granted April 27, 1937, to C. C. Jones;

No. 2,165,482, granted July 11, 1939, to P. E. Hovgard;

No. 2,257,260, granted September 30, 1941, to A. Kartveli;

No. 2,426,334, granted August 26, 1947, to T. A. Banning, Jr.;

No. 2,507,611, granted May 16, 1950, to C. E. Pappas et al; and

No. 3,009,670, granted November 21, 1961, to P. E. Williams et al.

As stated above, the advanced airfoils that are currently in use, the supercritical airfoils, provide low wave drag but relatively high friction drag. Therefore, the present invention is directed primarily toward providing an airfoil that achieves laminar flow over a large percentage of the airfoil chord for low friction drag, in addition to low shock wave losses and thus low wave drag, at supercritical Mach numbers and operational coefficients of lift. The combination of low wave drag and low friction drag increases aerodynamic efficiency and fuel savings.

There are two basic approaches to the problem of achieving laminar flow. One of these approaches is laminar flow control that is obtained by providing controlled suction along the skin of the wing. This approach theoretically provides great reductions in frictional drag. However, the practical usefulness of the approach is severely limited by the high degree of complexity of the technology involved and the numerous very difficult design problems. The other approach is to design the shape of the airfoil to provide natural laminar flow. This is done by providing pressure gradients along the chord length of the airfoil that are favorable to maintaining natural laminar flow. The natural laminar flow approach can provide as much drag reduction as the laminar flow control approach, without involving the degree of complexity of the laminar flow control approach, when natural laminar flow is achieved over a large portion of the chord surfaces, there is a weak shock at and above the critical Mach number, and the boundary layer stays attached in the aft region of the airfoil.

According to linear boundary layer stability theory, transition from laminar flow to turbulent flow in the boundary layer occurs because of the amplification of initially infinitesimal disturbances as the disturbances propagate downstream. The rate at which a disturbance is amplified depends on its frequency and propagation direction. When the amplitude of the disturbance grows large enough, it will distort the mean boundary layer profile and cause transition to turbulent flow. In high-speed swept wing aircraft, there are two primary sources of boundary layer disturbances. The first of these is viscous or Tollmien-Schlichting instability. This type of instability propagates substantially in the main direction of downstream flow. Thus, the more favorable the pressure gradient, the smaller the amplification of the boundary layer disturbances caused by Tollmien-Schlichting instability.

The second primary source of boundary layer disturbances is inflectional or crossflow instability. The disturbances caused by crossflow instability propagate in a direction that is essentially perpendicular to the direction of local free-stream flow. Crossflow in the boundary layer results from the combination of the sweep of the wing and the pressure gradient and is therefore most severe in the leading edge and trailing edge regions where the pressure gradients are largest. In order to obtain the optimum reduction in total instability, it is necessary to determine the optimum pressure gradient. In general, for the upper surface (and the lower surface), a steep initial pressure gradient is best at low Reynolds numbers and a shallower initial pressure gradient is best at high wing sweeps with high Reynolds numbers.

In the past few years, there has been a considerable amount of research and development activity aimed at developing an airfoil having natural laminar flow over a major portion of the wing chord of a high-speed swept wing aircraft. The results of some of this activity have been reported in Boundary Layer Stability Analysis of a Natural Laminar Flow Glove on the F-111 TACT Airplane by L. James Runyan and Louis L. Steers, reprinted from Viscous Flow Drag Reduction, edited by Gary R. Hough, Vol. 72 of Progress in Astronautics and Aeronautics, 1980; and Natural Laminar Flow Airfoil Analysis and Trade Studies, NASA Contractor Report 159029, released for general publication in June 1981. The airfoils discussed in these publications do not have optimized pressure gradients. Although some natural laminar flow is achieved, studies show that at a Mach number of .78, a coefficient of lift of .50, a maximum thickness/chord ratio of 10.1% and a chord Reynolds number of $30 \times 10^6$ there is a relatively early transition of laminar flow to turbulent flow. The studies predict that this transition will occur at about 20% of chord length, and that therefore the airfoils do not achieve the desired degree of frictional drag reduction. In addition, the airfoils discussed in the publications have a relatively thick boundary layer caused by turbulence. The thickness of the boundary layer results in a greater chance of separation of the boundary layer flow in the aft region of the airfoil.

The above patents and other literature and the prior art that is discussed and/or cited therein should be studied for the purpose of putting the present invention into proper perspective relative to the prior art.

## Disclosure of the Invention

The subject of this invention is an improved airfoil for use primarily on wing surfaces to increase the aerodynamic efficiency of the aircraft. According to an aspect of the invention, the airfoil has a maximum thickness at a chord station of about 40% to about 50% of the chord. The upper surface of the airfoil has a point of minimum curvature located forward of both the chord station of the maximum thickness and the midchord station. The curvature of the upper surface increases and then decreases aft of the midchord station. The lower surface of the airfoil is below the chord line along substantially the entire length of the chord. The improvement in the airfoil comprises a leading edge shaped to obtain a steep initial pressure gradient to about 1% of the chord. The leading edge includes a generally elliptical upper surface portion and a generally elliptical lower surface portion. The upper surface of the airfoil has no regions of constant radius of curvature from essentially 0% of the chord to about 98% of the chord. The airfoil has a curvature shaped to obtain a favorable pressure gradient to provide natural laminar flow over the upper surface to at least about 50% to about 60% of the chord when the chord Reynolds number and the sweep angle of a wing with the airfoil are in the range from a chord Reynolds number of about $15 \times 10^6$ and a sweep angle of about 25° to a chord Reynolds number of about $30 \times 10^6$ and a sweep angle of about 15°, and to obtain low shock wave losses at supercritical Mach numbers and operational coefficients of lift. In the preferred embodiment, the leading edge has a nominal radius of curvature that is between about .7% of the chord and about 1% of the chord.

According to another aspect of the invention, more than half the thickness of the leading edge is below the chord line for substantially the entire chordwise distance from 0% of the chord to about 1% of the chord.

According to another aspect of the invention, the curvature of the airfoil is shaped to obtain a favorable pressure gradient to provide natural laminar flow over the lower surface to about 45% of the chord when the Mach number is about .78, the coefficient of lift is about .50, and the chord Reynolds number is about $30 \times 10^6$.

According to still another aspect of the invention, the airfoil is designed to have an upper surface with a first region in which velocity builds from near stagnation to supersonic, a second region in which velocity is maintained to the shock point where it reduces to sonic, and a third region in which velocity reduces to below free-stream velocity at the trailing edge. The airfoil comprises a leading edge shaped to obtain a steep initial pressure gradient to about 1% of the chord. More than half the thickness of the leading edge is below the chord line for substantially the entire chordwise distance from 0% of the chord to about 1% of the chord. The leading edge includes a generally elliptical upper surface portion and a generally elliptical lower surface portion. The airfoil has an upper surface with no regions of constant radius of curvature from essentially 0% of the chord to about 98% of the chord. The airfoil has a curvature shaped to obtain a favorable pressure gradient to provide natural laminar flow over the upper surface to at least about 50% to about 60% of the chord when the chord Reynolds number and the sweep angle of a wing with the airfoil are in the range from a chord Reynolds number of about $15 \times 10^6$ and a sweep angle of about 25° to a chord Reynolds number of about $30 \times 10^6$ and a sweep angle of about 15°, and to obtain low shock wave losses at supercritical Mach numbers and operational coefficients of lift.

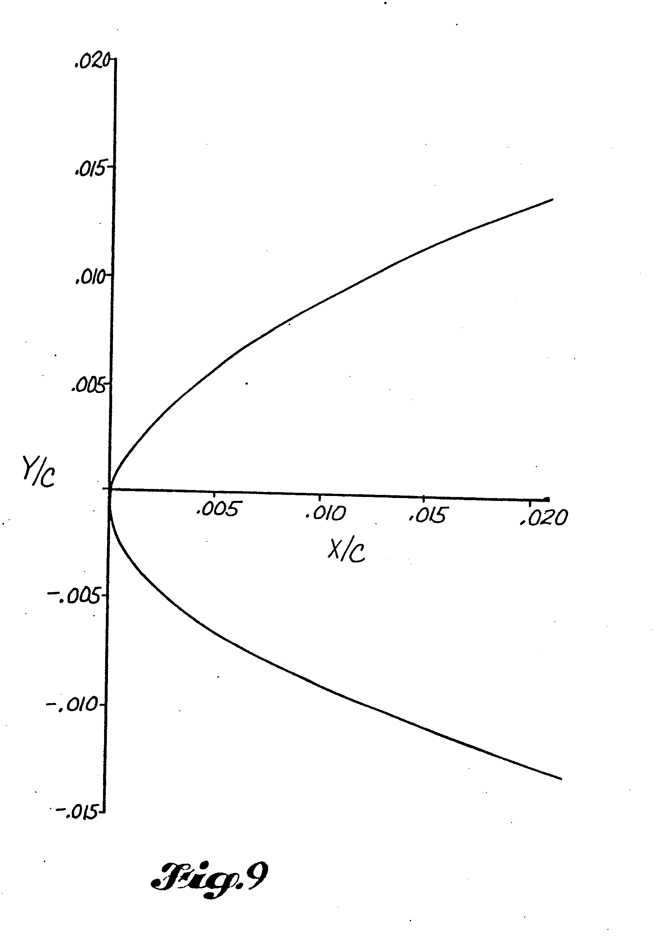

According to a preferred aspect of the invention, the airfoil comprises an upper surface with the coordinates shown in Fig. 8A, and a lower surface with the coordinates shown in Fig. 8B.

The airfoil of the present invention provides significantly improved aerodynamic efficiency and, therefore, fuel savings. The increase in efficiency results from the combination of considerably lower friction drag and low wave drag. The low friction drag is in turn the result of the maintenance of natural laminar flow over a large percentage of the chord. As indicated above, the effectiveness of the airfoil in providing such laminar flow is maintained over a good range of chord Reynolds numbers and wing sweep angles. The laminar flow and the resulting low friction drag is provided without sacrificing the low wave drag that is the result of the avoidance of a strong shock wave.

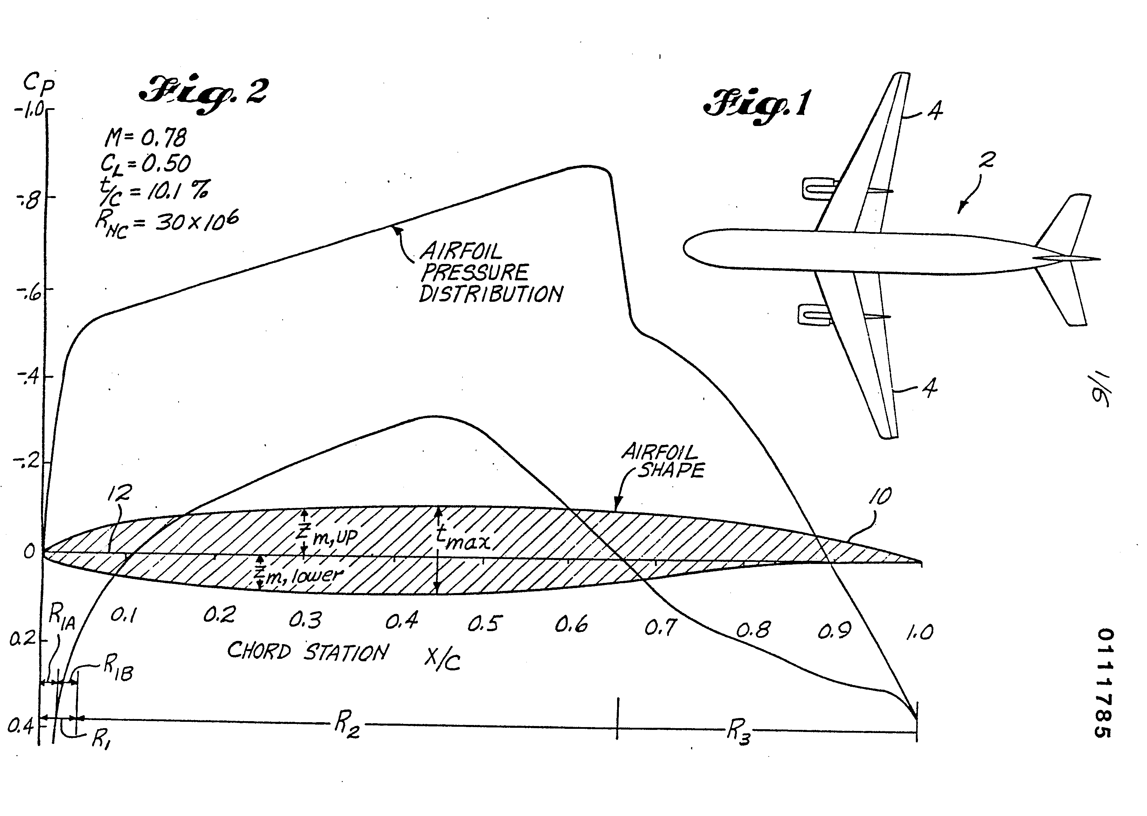

The airfoil of the invention has been developed primarily for use on the wings of commercial passenger aircraft of the type shown in Fig. 1. However, the airfoil of the invention is also suitable for use on other types of wings and aircraft. For example, the aerodynamic efficiency of small business-type jet aircraft can be greatly increased by providing the wings of the aircraft with airfoils constructed according to the invention. Although the airfoil of the invention is effective on intermediate sweep wings (a sweep angle of up to 25°), a straight wing aircraft can benefit even more from the provision of airfoils constructed according to the invention. This savings may be particularly significant in cargo airplanes. The fact that straight wings provide a relatively bumpy and uncomfortable ride is not nearly as significant in cargo airplanes as it is in aircraft designed to carry passengers. Therefore, a cargo airplane may be provided with straight wings with airfoils constructed according to the invention to maximize the improvement in aerodynamic efficiency.

The airfoil of the invention provides significant improvement in aerodynamic efficiency without requiring the solution of the very difficult technological problems associated with laminar flow control that is obtained by providing controlled suction along the skin of the wing. The surface of a wing with an airfoil constructed according to the invention remains smooth and relatively simple without requiring the complex suction means necessary to achieve laminar flow control.

These and other advantages and features will become apparent from the detailed description of the best mode for carrying out the invention that follows.

Brief Description of the Drawings

In the drawings, like element designations refer to like parts throughout, and

Fig. 1 is a simplified top plan view of a typical commercial passenger aircraft of a type that would benefit from the inclusion on its wings of the airfoil of the invention.

Fig. 2 is a graph showing the shape of the preferred embodiment of the airfoil and a pressure distribution associated with the upper and lower surfaces of the preferred embodiment.

Fig. 3 is a graphic illustration of the upper surface curvature and the lower surface curvature of the preferred embodiment, shown in association with a graphical representation of the shape of the preferred embodiment of the airfoil.

Fig. 4A is a graphical representation of the pressure distribution illustrated in Fig. 2, shown for purposes of comparison in conjunction with a pressure distribution of a previous natural laminar flow airfoil, the previous pressure distribution being shown in broken lines.

Fig. 4B is a graph of a typical pressure distribution of a representative supercritical airfoil.

Fig. 5 is an enlarged graphical representation of the forward portion of the preferred embodiment of the airfoil of the invention, including in broken lines the shape of the previous airfoil whose pressure distribution is shown in broken lines in Fig. 4A.

Fig. 6 is a graph showing disturbance amplification factor plotted against chord station, with the curve associated with the preferred embodiment of the invention shown in solid line and the curve associated with the previous airfoil shown in broken lines.

Figs. 7A-7C show the sonic lines and boundary layer patterns associated, respectively, with a representative supercritical airfoil, the previous airfoil, and the preferred embodiment of the present invention.

Figs. 8A and 8B are tables of the upper surface coordinates and lower surface coordinates, respectively, of the preferred embodiment, with each of the coordinates being expressed as a ratio of the distance from the chord line to the full length of the chord.

Fig. 9 is an enlarged graph of the leading edge portion of the preferred embodiment.

## Best Mode for Carrying Out the Invention

The drawings show an airfoil 10 that is constructed according to the invention and that also constitutes the best mode of the invention currently known to the applicant. The airfoil of the invention was designed primarily for use on the wings 4 of commercial passenger aircraft of the type shown in Fig. 1. It is anticipated that each wing 4 of the aircraft 2 will be provided with a cross-sectional shape that forms an airfoil constructed according to the invention. The cross-sectional shape will be larger or smaller according to the point on the wingspan at which the cross section is taken, but the proportions of the cross section will be constant from wing tip to wing root except that near the root a transition to the fuselage will be provided in accordance with accepted aircraft design. Note that the airfoil is normal to the leading edge of the wing.

The airfoil of the invention may be described in terms of regions from the leading edge 14 (Fig. 9), along the upper surface to the trailing edge. (See Fig. 2) The first region $R_1$ extends from 0% to approximately 4% of the chord. In this region the velocity of the flow around the leading edge builds from near stagnation to supersonic. Region $R_1$ may be divided into two parts, region $R_{1A}$, which extends from 0% to 2% of the chord and constitutes the leading edge portion, and region $R_{1B}$, which extends from 2% to about 4% of the chord. Region $R_{1B}$ provides a fairing from the leading edge 14 to the main upper surface. This fairing provides a smooth change in flow velocity between the leading edge part of region $R_1$ and the main upper surface.

The velocity accelerates over the upper surface portion of the leading edge 14 at a high rate, from 0 velocity at the stagnation point to approximately Mach number .95 (95% of the speed of sound) at the 2% chord station. This velocity generally corresponds to 1.19 times the free-stream velocity. The second part $R_{1B}$ of region $R_1$, as stated above, provides a smooth change in velocity between the leading edge 14 and the main upper surface of the airfoil 10. In region $R_{1B}$, the velocity continues to accelerate from subsonic, through sonic at approximately 4% of the chord, to supersonic aft of 4% of the chord. It can be seen that the acceleration of the flow is considerably lower in region $R_{1B}$ than is the initial acceleration of the flow in the leading edge region $R_{1A}$.

The second region $R_2$ extends from about 4% of the chord to the shock point at about 65% of the chord. In region $R_2$, the supersonic velocity of the flow is maintained and slightly accelerated to the shock point where the velocity reduces to sonic. The curvature of region $R_2$ is carefully tailored so that the supersonic flow acceleration is just sufficient to maintain natural laminar boundary layer flow. Excess supersonic flow acceleration is avoided in order to avoid a strong shock wave at the end of the region $R_2$. This is necessary since excessive supersonic flow acceleration, or supersonic flow overexpansion, results in a strong shock wave and the associated undesirable high shock wave drag. The flow velocity upstream of the shock wave is approximately 1.16 times the speed of sound (local Mach number, $M_1 = 1.16$).

Region $R_2$ is characterized by a number of important features. The chordwise station of maximum thickness $t_{max}$ (the maximum distance from the upper surface of the airfoil 10 to the lower surface) is in region $R_2$ near the midchord station at 50% of the chord. Preferably, this station $t_{max}$ is at about 40% to about 50% of the chord. In the preferred embodiment shown in the drawings, $t_{max}$ is located at approximately 45% of the chord and the maximum thickness/chord ratio is 10.1%. The point of minimum curvature on the upper surface $Z_{m,up}$ (excluding the portion aft of about 98% of the chord) is forward of both the chordwise station of maximum thickness $t_{max}$ and the midchord station. In the preferred embodiment, the point of minimum curvature $Z_{m,up}$ is located at about 30% of the chord.

The third region $R_3$ extends from about 65% of the chord through the trailing edge to 100% of the chord. In this region $R_3$, the flow velocity reduces to slightly subsonic to equal the free-stream velocity and then further reduces to below free-stream velocity at the trailing edge. The maximum curvature of region $R_3$ occurs at about 80% of the chord, and the flow velocity decelerates to free-stream velocity at about this 80% chord station. In region $R_3$, the curvature of the upper surface continues to increase (the increase having begun at the point of minimum curvature $Z_{m,up}$) to the maximum curvature at about 80% of the chord and then decreases through the trailing edge. The slope of the upper surface portion of the trailing edge is approximately 12° with respect to the airfoil chord line 12. The chord line 12 is determined in the conventional manner by drawing a line through the forwardmost point and the aftmost point of the airfoil when it is oriented horizontally for horizontal flight.

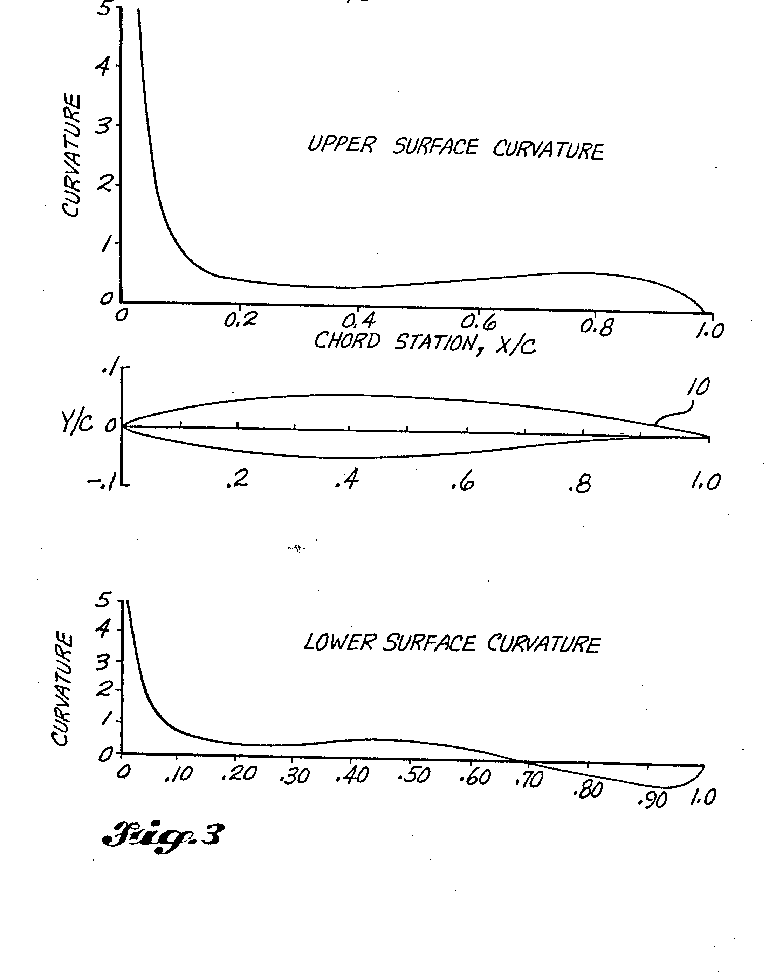

The upper surface of the airfoil of the invention is entirely convex and has no regions of constant radius of curvature from essentially 0% of the chord to about 98% of the chord. This means that there are no flat portions of the upper surface forward of about the 98% chord station and that the leading edge portion is not circular in shape. The upper surface from about 98% of the chord to 100% of the chord is essentially flat. The curvature of the upper surface is shown in the top graph in Fig. 3.

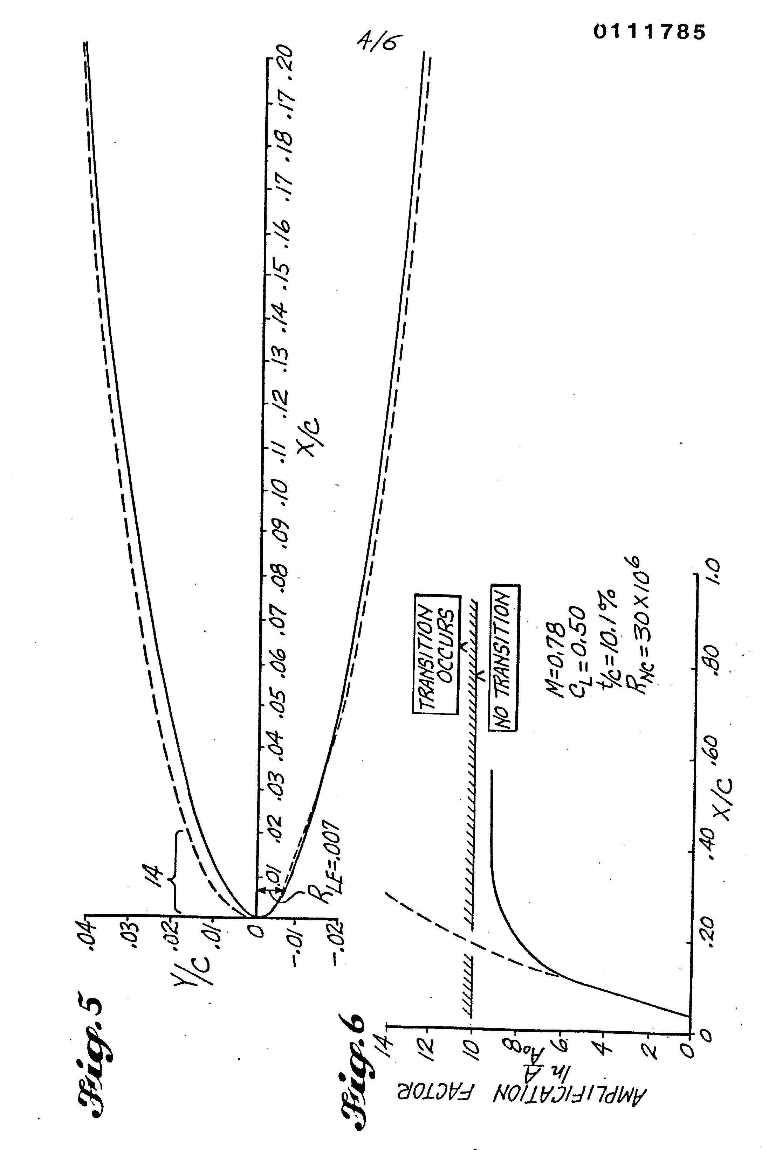

The shape of the leading edge of the preferred embodiment of the airfoil 10 is most clearly illustrated in Fig. 9. The leading edge is sharp when compared to the blunt leading edges of typical supercritical airfoils and the relatively blunt leading edge of the previous airfoil shown in broken lines in Fig. 5. Both the upper and lower surface portions of the leading edge of the airfoil of the invention have an unorthodox generally elliptical curvature. For substantially the entire chordwise distance from 0% of the chord to about 1% of the chord, more than half the thickness of the leading edge 14 is below the chord line 12. In other words, the forward 1% of the airfoil is thicker on the bottom below the chord line 12 than it is above the chord line 12. As stated above, the upper surface portion of the leading edge 14 is generally elliptical. The lower surface portion of the leading edge 14 is also generally elliptical, but the upper and lower surface portions of the preferred embodiment are formed from segments of different ellipses.

The unorthodox shape of the leading edge 14 makes it impossible to determine the leading edge radius of curvature by conventional methods. The nominal radius of curvature at the leading edge $R_{LE}$ in the preferred embodiment is .7% of the chord length. This nominal leading edge radius of curvature $R_{LE}$ is representative of the curvature of the leading edge 14 and corresponds to the coordinates of the lower surface at chord station .007, at which the ordinate of the lower surface is -.007.

The airfoil of the invention has a lower surface which is at or below the chord line 12 along essentially the entire length of the chord. At the aft end of the trailing edge, the lower surface merges into the chord line 12 and the curvature of the lower surface becomes 0. The bottom graph in Fig. 3 shows the curvature of the lower surface. As can be seen in the graph, the curvature is convex from 0% of the chord to approximately 67% of the chord, at which chord station there is an inflection point aft of which the lower surface becomes slightly concave. The concavity of the trailing edge portion of the lower surface provides a cambered trailing edge for increased lift. However, the trailing edge is not highly cambered like the typical trailing edge of a supercritical airfoil in which a part of the trailing edge portion of the lower surface is above the chord line. When there are relatively low lift requirements and/or the sweep angle is relatively small, the camber of the trailing edge of an airfoil constructed according to the invention may be considerably less than that of the preferred embodiment shown in the drawings.

The lower surface of the airfoil 10, like the upper surface, may be described in terms of regions. The first of these regions extends from the 0% chord station to about the 4% chord station and corresponds to region $R_1$ of the upper surface. In the leading edge portion of the first region, airflow over the lower surface is accelerated but at a lesser rate than that at which the airflow is accelerated over the upper surface in region $R_{1A}$. The leading edge 14 is less curved on the lower surface than it is on the upper surface. On the lower surface, the velocity accelerates from 0 at the stagnation point to about 60% of the free-stream velocity at the 2% chord station. The aft portion of the first lower surface region (about 2% to about 4% of the chord) provides fairing between the leading edge and the main part of the lower surface.

The second region (the main part of the lower surface) extends from about 4% of the chord to about 67% (the inflection point). This region is comparable to region $R_2$ except that there is no supersonic portion of the region. The point of minimum curvature of the region (forward of about 60% of the chord) $Z_{m,lower}$ is at about 25% of the chord. The curvature of the lower surface of the airfoil 10 aft of the point $Z_{m,lower}$ has a maximum near midchord at the same chord station as the chord station of maximum thickness $t_{max}$.

The third lower surface region extends from about 67% of the chord to the aft end of the airfoil 10. As discussed above, the curvature in this region is convex. Aft of about 90% of the chord, the lower surface is very close to the chord line 12. In other words, the trailing edge slope is practically zero.

Fig. 2 is a graph of the shape of the preferred embodiment of the airfoil 10 and the pressure distribution obtained by the airfoil 10 for a Mach number of .78, a coefficient of lift of .50, a maximum thickness/chord ratio of 10.1%, and a chord Reynolds number of $30 \times 10^6$. The upper portion of the pressure distribution curve shows the pressure distribution on the upper surface of the airfoil 10, and the lower portion shows the pressure distribution on the lower surface. As the graph clearly illustrates, the shape of the leading edge obtains a steep initial pressure gradient to about 1% of the chord. The shape of the leading edge provides the high rate of acceleration of the flow around it from the stagnation point to approximately a Mach number of .95 at the 2% chord station. The second part $R_{1B}$ of region $R_1$ of the airfoil 10 provides a smooth transition in velocity between the leading edge 14 and the main upper surface and a smooth transition in the pressure distribution from the leading edge 14 to the main upper surface.

The curvature of the airfoil 10 is shaped to obtain a favorable pressure gradient to provide natural laminar flow over the upper surface to approximately 50% to 60% of the chord and over the lower surface to approximately 45% of the chord. Such natural laminar flow over the upper surface can be maintained when the chord Reynolds number and the sweep angle of the wing with the airfoil are in the range from a chord Reynolds number of about $15 \times 10^6$ and a sweep angle of about 25° to a chord Reynolds number of about $30 \times 10^6$ and a sweep angle of about 15°. Within this range, a higher chord Reynolds number requires a correspondingly lower sweep angle. The design conditions for providing natural laminar flow over the lower surface to about 45% of the chord include a Mach number of about .78, a coefficient of lift of about .50, and a chord Reynolds number of about 30 x 10$^6$. For the conditions illustrated in Fig. 2, natural laminar flow is maintained over the upper surface to about 60% of the chord and the weak shock wave occurs at about 65% of the chord. In addition to providing natural laminar flow over a large percentage of the chord, the curvature of the airfoil 10 obtains low shock wave losses at supercritical Mach numbers and operational coefficients of lift.

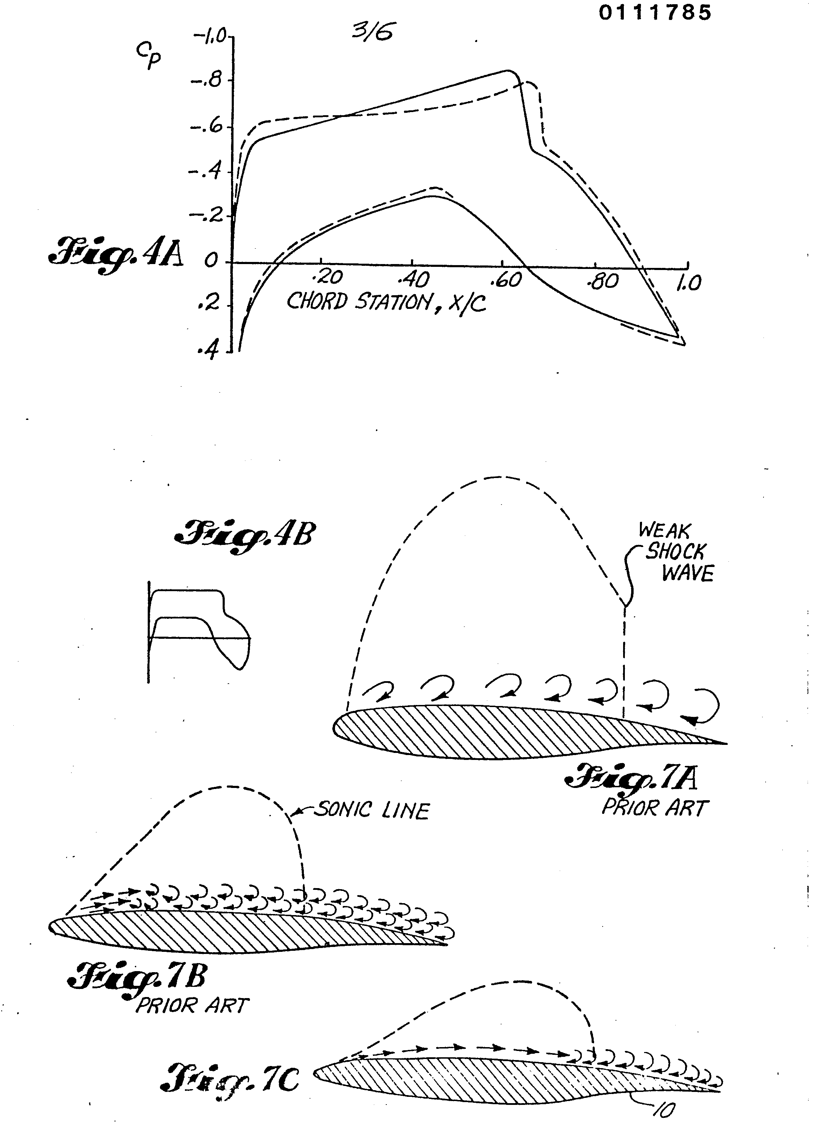

Fig. 4A is a graph of the pressure distribution shown in Fig. 2 compared to the pressure distribution of an earlier airfoil. The pressure distribution of the airfoil 10 is shown in solid lines, and the pressure distribution of the earlier airfoil is shown in broken lines. The earlier airfoil is Airfoil 5 described in the NASA Contractor Report 159029 discussed above. The pressure distribution of the airfoil 10 is much more favorable to the maintenance of natural laminar flow. Fig. 4B shows a typical pressure distribution for a representative supercritical airfoil. As can be seen, the pressure distribution of the previous airfoil is closer to the supercritical pressure distribution than is the pressure distribution of the airfoil 10 of the preferred embodiment of the invention.

Fig. 5 is an enlarged graphical view of the forward 20% of the preferred embodiment of the airfoil of the invention compared to the forward 20% of Airfoil 5. The airfoil 10 is shown in solid lines, and Airfoil 5 is shown in broken lines. Fig. 6 shows the amplification factor, that is the relative amplification of boundary layer disturbances, plotted against chord station for each of the airfoils shown in Fig. 5. The amplification factor is equal to the natural log of the ratio of the local amplitude to the amplitude at the neutral stability point (ln A/A•). Each curve in Fig. 6 represents the envelope of a spectrum of disturbance frequencies. As Fig. 6 clearly illustrates, the airfoil 10 of the invention maintains laminar flow on the upper surface to at least about 60% of the chord, but Airfoil 5 maintains laminar flow only to about 20% of the chord. For the conditions indicated in Fig. 6, transition from laminar flow to turbulent flow on the upper surface of Airfoil 5 occurs at about 20% of the chord.

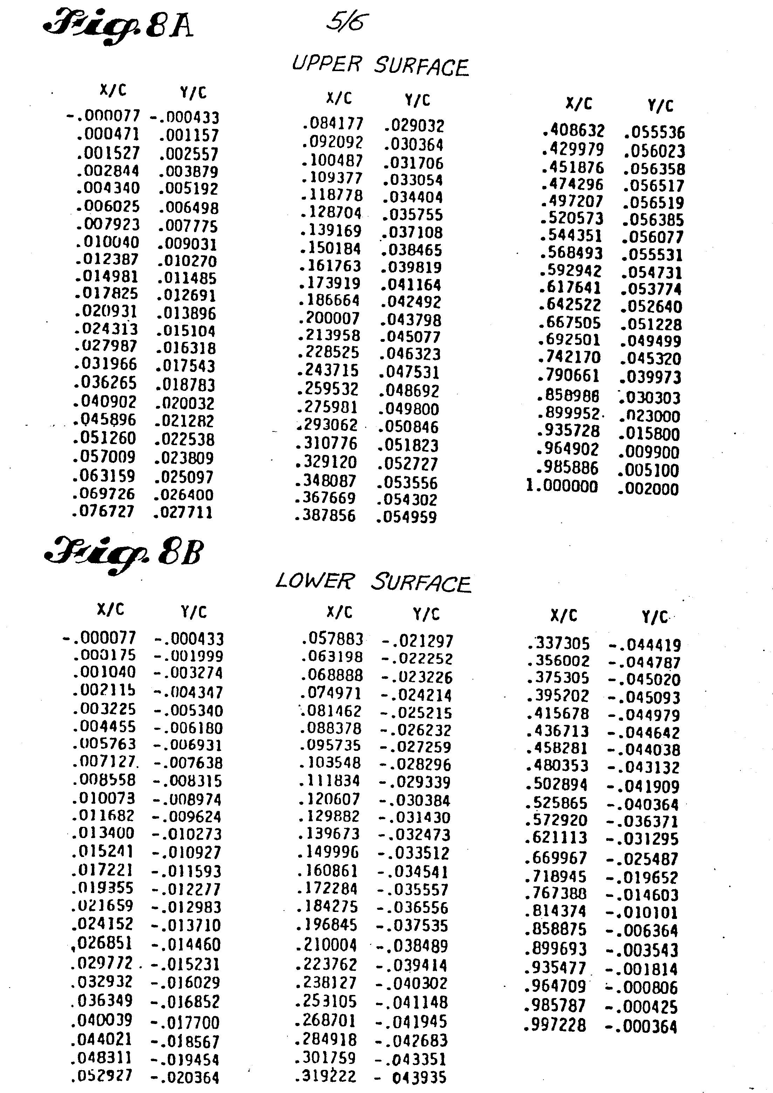

Figs. 7A-7C show representative sonic lines and boundary layer flow patterns for a typical supercritical airfoil, Airfoil 5, and the airfoil of the invention, respectively. Fig. 7A shows the weak shock wave and the fully turbulent flow typical of supercritical airfoils. Fig. 7B shows the relatively round and high sonic line curve, the relatively thick boundary layer, and the early transition from laminar to turbulent flow of Airfoil 5. Fig. 7C shows the somewhat flattened sonic line curve, relatively thin boundary layer, and large percentage of laminar boundary layer flow of the airfoil of the invention. It should be noted that Airfoil 5 has, in addition to the disadvantage of the early transition to turbulent flow, the disadvantage of having a relatively thick boundary layer. The relative thickness of the boundary layer increases the chances of separation of the boundary layer flow at the trailing edge of the airfoil.

Figs. 8A and 8B show the coordinates to 6 decimal places of the upper surface and the lower surface, respectively, of the preferred embodiment of the airfoil of the invention. Each of the coordinates is expressed as a ratio between the distance from the chord line 12 to the point on the surface and the total chord length. It is of course to be understood that, although the coordinates shown in Figs. 8A and 8B describe the best mode of the airfoil of the invention currently known to the applicant, modifications of this best mode may be made to conform the airfoil to desired design conditions, such as maximum thickness, Mach number, lift capability, etc., without departing from the spirit and scope of the invention.

It will be obvious to those skilled in the art to which this invention is addressed that the invention may be used to advantage in a variety of situations. Therefore it is also to be understood by those skilled in the art that various changes, modifications, and omissions in form and detail may be made without departing from the spirit and scope of the present invention as defined by the following claims.

What is claimed is:

1. An airfoil comprising:

a maximum thickness at a chord station of about 40% to about 50% of the chord;

an upper surface which has a point of minimum curvature located forward of both the chord station of the maximum thickness and the midchord station, and the curvature of which increases and then decreases aft of the midchord station;

a lower surface which is below the chord line along substantially the entire length of the chord; and

the improvement comprising a leading edge shaped to obtain a steep initial pressure gradient to about 1% of the chord, said leading edge including a generally elliptical upper surface portion and a generally elliptical lower surface portion;

the upper surface of said airfoil having no regions of constant radius of curvature from essentially 0% of the chord to about 98% of the chord;

said airfoil having a curvature shaped to obtain a favorable pressure gradient to provide natural laminar flow over the upper surface to at least about 50% to about 60% of the chord when the chord Reynolds number and the sweep angle of a wing with the airfoil are in the range from a chord Reynolds number of about 15 x $10^6$ and a sweep angle of about 25° to a chord Reynolds number of about 30 x $10^6$ and a sweep angle of about 15°, and to obtain low shock wave losses at supercritical Mach numbers and operational coefficients of lift.

2. An airfoil as described in claim 1, in which the leading edge has a nominal radius of curvature that is between about .7% of the chord and about 1% of the chord.

3. An airfoil as described in claim 1, in which more than half the thickness of the leading edge is below the chord line for substantially the entire chordwise distance from 0% of the chord to about 1% of the chord.

4. An airfoil as described in claim 3, in which the leading edge has a nominal radius of curvature that is between about .7% of the chord and about 1% of the chord.

5. An airfoil as described in claim 4, in which the curvature of the airfoil is shaped to obtain a favorable pressure gradient to provide natural laminar flow over the lower surface to about 45% of the chord when the Mach number is about .78, the coefficient of lift is about .50, and the chord Reynolds number is about $30 \times 10^6$.

6. An airfoil designed to have an upper surface with a first region in which velocity builds from near stagnation to supersonic, a second region in which velocity is maintained to the shock point where it reduces to sonic, and a third region in which velocity reduces to below free-stream velocity at the trailing edge, comprising:

a leading edge shaped to obtain a steep initial pressure gradient to about 1% of the chord, more than half the thickness of said leading edge being below the chord line for substantially the entire chordwise distance from 0% of the chord to about 1% of the chord, and said leading edge including a generally elliptical upper surface portion and a generally elliptical lower surface portion; and

an upper surface with no regions of constant radius of curvature from essentially 0% of the chord to about 98% of the chord;

said airfoil having a curvature shaped to obtain a favorable pressure gradient to provide natural laminar flow over the upper surface to at least about 50% to about 60% of the chord when the chord Reynolds number and the sweep angle of a wing with the airfoil are in the range from a chord Reynolds number of about $15 \times 10^6$ and a sweep angle of about 25° to a chord Reynolds number of about $30 \times 10^6$ and a sweep angle of about 15°, and to obtain low shock wave losses at supercritical Mach numbers and operational coefficients of lift.

7. An airfoil as described in claim 6, in which the leading edge has a nominal radius of curvature that is between about .7% of the chord and about 1% of the chord.

8. An airfoil comprising:

an upper surface with the coordinates shown in Fig. 8A; and

a lower surface with the coordinates shown in Fig. 8B.

**Fig. 2**

$C_P$

$M = 0.78$
$C_L = 0.50$
$t/c = 10.1\%$
$R_{NC} = 30 \times 10^6$

-1.0
-.8
-.6
-.4
-.2
0
0.2
0.4

AIRFOIL PRESSURE DISTRIBUTION

AIRFOIL SHAPE

$z_{m,UP}$
$t_{max}$
$\overline{z}_{m,lower}$

12
10

$R_{1A}$
$R_{1B}$
$R_1$
$R_2$
$R_3$

0.1   0.2   0.3   0.4   0.5   0.6   0.7   0.8   0.9   1.0

CHORD STATION   X/C

**Fig. 1**

2
4
4
1/6

0111785

UPPER SURFACE CURVATURE

CHORD STATION, X/C

LOWER SURFACE CURVATURE

Fig. 3

Fig.4A

Fig.4B

Fig.7A
PRIOR ART

WEAK
SHOCK
WAVE

SONIC LINE

Fig.7B
PRIOR ART

Fig.7C

*Fig.5*

*Fig.6*

TRANSITION OCCURS

NO TRANSITION

$M=0.78$
$C_L=0.50$
$t/c=10.1\%$
$R_{NC}=30\times10^6$

$R_{LE}=.007$

4/6

011785

# Fig. 8A

## UPPER SURFACE

| X/C | Y/C | X/C | Y/C | X/C | Y/C |
|---|---|---|---|---|---|
| -.000077 | -.000433 | .084177 | .029032 | .408632 | .055536 |
| .000471 | .001157 | .092092 | .030364 | .429979 | .056023 |
| .001527 | .002557 | .100487 | .031706 | .451876 | .056358 |
| .002844 | .003879 | .109377 | .033054 | .474296 | .056517 |
| .004340 | .005192 | .118778 | .034404 | .497207 | .056519 |
| .006025 | .006498 | .128704 | .035755 | .520573 | .056385 |
| .007923 | .007775 | .139169 | .037108 | .544351 | .056077 |
| .010040 | .009031 | .150184 | .038465 | .568493 | .055531 |
| .012387 | .010270 | .161763 | .039819 | .592942 | .054731 |
| .014981 | .011485 | .173919 | .041164 | .617641 | .053774 |
| .017825 | .012691 | .186664 | .042492 | .642522 | .052640 |
| .020931 | .013896 | .200007 | .043798 | .667505 | .051228 |
| .024313 | .015104 | .213958 | .045077 | .692501 | .049499 |
| .027987 | .016318 | .228525 | .046323 | .742170 | .045320 |
| .031966 | .017543 | .243715 | .047531 | .790661 | .039973 |
| .036265 | .018783 | .259532 | .048692 | .858986 | .030303 |
| .040902 | .020032 | .275981 | .049800 | .899952 | .023000 |
| .045896 | .021282 | .293062 | .050846 | .935728 | .015800 |
| .051260 | .022538 | .310776 | .051823 | .964902 | .009900 |
| .057009 | .023809 | .329120 | .052727 | .985886 | .005100 |
| .063159 | .025097 | .348087 | .053556 | 1.000000 | .002000 |
| .069726 | .026400 | .367669 | .054302 | | |
| .076727 | .027711 | .387856 | .054959 | | |

# Fig. 8B

## LOWER SURFACE

| X/C | Y/C | X/C | Y/C | X/C | Y/C |
|---|---|---|---|---|---|
| -.000077 | -.000433 | .057883 | -.021297 | .337305 | -.044419 |
| .000175 | -.001999 | .063198 | -.022252 | .356002 | -.044787 |
| .001040 | -.003274 | .068888 | -.023226 | .375305 | -.045020 |
| .002115 | -.004347 | .074971 | -.024214 | .395202 | -.045093 |
| .003225 | -.005340 | .081462 | -.025215 | .415678 | -.044979 |
| .004455 | -.006180 | .088378 | -.026232 | .436713 | -.044642 |
| .005763 | -.006931 | .095735 | -.027259 | .458281 | -.044038 |
| .007127 | -.007638 | .103548 | -.028296 | .480353 | -.043132 |
| .008558 | -.008315 | .111834 | -.029339 | .502894 | -.041909 |
| .010073 | -.008974 | .120607 | -.030384 | .525865 | -.040364 |
| .011682 | -.009624 | .129882 | -.031430 | .572920 | -.036371 |
| .013400 | -.010273 | .139673 | -.032473 | .621113 | -.031295 |
| .015241 | -.010927 | .149996 | -.033512 | .669967 | -.025487 |
| .017221 | -.011593 | .160861 | -.034541 | .718945 | -.019652 |
| .019355 | -.012277 | .172284 | -.035557 | .767388 | -.014603 |
| .021659 | -.012983 | .184275 | -.036556 | .814374 | -.010101 |
| .024152 | -.013710 | .196845 | -.037535 | .858875 | -.006364 |
| .026851 | -.014460 | .210004 | -.038489 | .899693 | -.003543 |
| .029772 | -.015231 | .223762 | -.039414 | .935477 | -.001814 |
| .032932 | -.016029 | .238127 | -.040302 | .964709 | -.000806 |
| .036349 | -.016852 | .253105 | -.041148 | .985787 | -.000425 |
| .040039 | -.017700 | .268701 | -.041945 | .997228 | -.000364 |
| .044021 | -.018567 | .284918 | -.042683 | | |
| .048311 | -.019454 | .301759 | -.043351 | | |
| .052927 | -.020364 | .319222 | -.043935 | | |

Fig.9

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | WO-A-8 102 557 (ASHILL) * Page 1, lines 1-6; page 2, lines 3-8; figures 1-3 * | 1,3 | B 64 C 3/14 |
| A | GB-A-2 022 045 (AEROSPATIALE) * Page 1, lines 22-60; page 3, lines 56,60; page 4, lines 1, 9-12; figures 1,2 * | 1,3 | |
| A | US ARMY HELICOPTER DESIGN DATCOM, vol. I, AIRFOILS, 31st May 1976, page 1.3.230, US Army Aviation Systems Command, St. Louis, Missouri, US * Page 1.3.230, right-hand column, lines 3-4; figure * | 1,2 | |

TECHNICAL FIELDS SEARCHED (Int. Cl. ³)

B 64 C

The present search report has been drawn up for all claims

| Place of search | Date of completion of the search | Examiner |
|---|---|---|
| THE HAGUE | 20-03-1984 | ZERI A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82